(19) Europäisches Patentamt / European Patent Office / Office européen des brevets

(11) **EP 3 672 149 A1**

(12) **EUROPEAN PATENT APPLICATION**

(43) Date of publication:
24.06.2020 Bulletin 2020/26

(51) Int Cl.:
*H04L 12/10* (2006.01)

(21) Application number: 19213689.3

(22) Date of filing: 04.12.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.12.2018 GB 201821026

(71) Applicant: CANON KABUSHIKI KAISHA
Ohta-ku
Tokyo 146-8501 (JP)

(72) Inventors:
• LAGRANGE, Pascal
35520 LA CHAPELLE DES FOUGERETZ (FR)
• ROUSSEAU, Pascal
35000 RENNES (FR)

(74) Representative: Santarelli
49, avenue des Champs-Elysées
75008 Paris (FR)

(54) **METHOD AND DEVICE FOR CONTROLLING DEVICE ACTIVATION**

(57) There is provided a controller device for controlling activation of devices interconnected by a power-over-data linear bus to which an item of power source equipment is also connected, the controller being configured to carry out the following steps:
determining whether at least one of the topology or the voltage conditions on the linear bus has changed relatively to a reference configuration;
selecting at least one activation mode depending on the result of the determining step; and
activating each device in the linear bus according to one of the at least one selected activation modes.

Fig. 5

EP 3 672 149 A1

**Description**

FIELD OF THE INVENTION

The present invention relates to a power over cable system. More specifically, the present invention relates to a method of controlling the activation of one or more powered devices connected to a power source according to a linear bus topology, after a temporary shutdown of the power source.

BACKGROUND OF THE INVENTION

In power over cable systems, such as Power over Ethernet (PoE) and Power over Coax (PoC), one or more devices are powered over network cables by an item of power sourcing equipment.

The power sourcing equipment (PSE) is a device such as a network switch that provides (sources) power on the network cable. A powered device (PD) refers to an apparatus powered by the PSE and thus consuming energy. Examples of powered devices include analog cameras, IP cameras including pan-tilt-zoom (PTZ) cameras, wireless access points (AP), and VoIP phones.

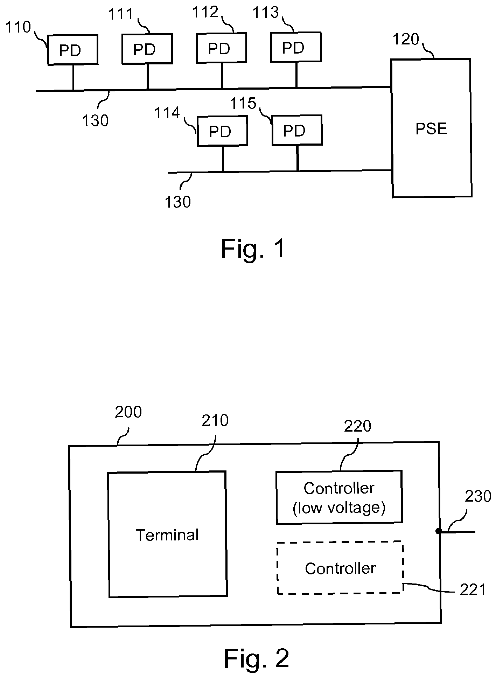

**Figure 1** is an illustration of a power over cable system comprising a PSE 120, a plurality of PDs 110, 111, 112, 113, 114 and 115, and two network cables 130. Each network cable 130 connects, according to a linear bus topology, a plurality of PDs 110-115 to one port of the PSE 120. Each network cable and associated PDs form a network segment.

The power over cable technology allows removal of separate data cables and power supplies requirements which would otherwise be needed to power the devices. This allows for more time and cost efficient installation for installers. However, the power distribution over data cables suffers from limitations on the total power that can be carried, and from a significant power loss in the cables due to the relatively low carried voltage (e.g. a typical voltage being comprised between 48 and 56 V). As known in the art, the total power consumption on one network segment is the accumulation of the power consumption of each device and the power dissipated in the cable due to the resistivity of the cable (Joule effect).

Typically, each port of the PSE is current-limited by a protection circuit that limits the distributed power to prevent damage in the cable and devices connected thereto. As an example, the PSE supplies a voltage-stabilized power supply of 56 V, and the protection circuits limit the power at each port to 50 W (watts). When the current at one port exceeds the authorized current, the corresponding protection circuit cuts the power on the considered port, shutting down the power supply to all devices connected thereto.

As the configuration of the power over cable system is not predictable, that is to say, how many devices are connected to each port of the PSE and what are their power consumptions are at a given time instant, it is difficult to know in advance the total power consumption that will be drawn on the port so as to prevent a power failure at network start-up or when hot-plugging one or several devices (i.e. adding one or more devices while the system is operating).

In the case where a PSE port is shut down, all the devices linked to that port are powered off and then powered up again as the port restarts. However, the port will be shut down again if power overrun conditions are still met for the port after reboot of the devices. An endless loop of shutdowns and reboots may thus occur, until one or more devices linked to the port are unplugged.

Moreover, in case the system installation has changed while a PSE port was shut down - such as the addition of one or more devices to the linear bus connected to the port - the system installer may experience unpredictable system reboot, i.e. devices previously operational may no longer be, after the reboot.

It may therefore be desired to prevent the system from entering such an unpredictable boot - that is to say, prevent an endless loop of shutdowns and reboots in case of a power overrun at the port level.

In addition, it may be desired to prevent an unexpected reboot sequence, e.g. a situation in which devices previously operational can no longer activate upon PSE port reboot because not enough power is available for them after reboot.

To avoid the aforementioned issues, the several PDs of a power over cable system may be started sequentially, as it is described, for instance, in US20050108588 (Foxconn Intl). However, such a method requires a prior knowledge of the whole network topology, along with an associated manual configuration setup process to be performed by the system installer. Unfortunalety, this requires significant installation time, especially when considering large-scale systems, such as large-scale video surveillance installations, which connect hundreds to thousands of video camera devices.

Moreover, the sequential startup process of the PDs would also add some extra latency to the overall system startup. Again, such sequential approach would significantly increase the setup duration and the associated installation cost and complexity in the case of aforementioned large-scale video surveillance installations.

SUMMARY OF THE INVENTION

The present invention has been devised to address at least one of the foregoing concerns.

According to a first aspect of the invention, there is provided a controller device for controlling activation of devices interconnected by a power-over-data linear bus to which an item of power source equipment is also connected, the controller being configured to carry out the following steps:

    determining whether at least one of the topology or the voltage conditions on the linear bus has changed relatively to a reference configuration;

selecting at least one activation mode depending on the result of the determining step; and

activating each device in the linear bus according to one of the at least one selected activation modes.

Thanks to the first aspect, the startup process is improved as devices are prevented from entering an endless loop of shutdowns and reboots.

According to a second aspect of the invention, there is provided a device of a power-over-data linear bus interconnecting a plurality of devices and an item of power source equipment, the device including the controller device aforementioned.

According to a third aspect of the invention, there is provided a Power over Ethernet (PoE) communication device including the controller device aforementioned.

According to a fourth aspect of the invention, there is provided a method for controlling activation of devices interconnected by a power-over-data linear bus to which an item of power source equipment is also connected, the method comprising:

determining whether at least one of the topology or the voltage conditions on the linear bus has changed relatively to a reference configuration;

selecting at least one activation mode depending on the result of the determining step; and

activating each device in the linear bus according to one of the at least one selected activation modes.

Since the present invention may be implemented in software, the present invention may be embodied as computer readable code for provision to a programmable apparatus on any suitable carrier medium, and in particular a suitable tangible carrier medium or suitable transient carrier medium. A tangible carrier medium may comprise a storage medium such as a floppy disk, a CD-ROM, a hard disk drive, a magnetic tape device or a solid state memory device or the like. A transient carrier medium may include a signal such as an electrical signal, an electronic signal, an optical signal, an acoustic signal, a magnetic signal or an electromagnetic signal, e.g. a microwave or RF signal.

Therefore, according to a fifth aspect of the invention, there is provided a computer program product for a programmable apparatus, the computer program product comprising instructions for carrying out the method aforementioned when the program is loaded and executed by a programmable apparatus.

According to a sixth aspect of the invention, there is provided a non-transitory computer-readable medium storing a program which, when executed by a microprocessor or computer system in a device of a power-over-cable system, causes the device to perform the method aforementioned.

Optional features of the invention are further defined in the dependent appended claims.

BRIEF DESCRIPTION OF THE DRAWINGS

Other particularities and advantages of the invention will also emerge from the following description, illustrated by the accompanying drawings, in which:

**Figure 1,** previously described, illustrates a power over cable system comprising a PSE and a plurality of PDs;

**Figure 2** schematically shows a powered device arrangement that is configured to embed embodiments of the invention;

**Figures 3a, 3b, 3c** and **3d** represent different exemplary arrangements of the powered device;

**Figure 4a** is a functional block diagram illustrating an implementation example of a powered device comprising an adapter unit and a camera unit;

**Figure 4b** illustrates a functional block diagram of a sensing unit configured to implement a cable resistance calculation method;

**Figure 5** is a flowchart illustrating operation of a controller module according to embodiments of the invention;

**Figure 6** represents a slow start process for the devices that have not been selected for performing a fast start process;

**Figure 7** is a flowchart illustrating steps of a method of predicting a voltage drop that would occur as a result of activating a terminal;

**Figure 8** illustrates a group of messages that may be exchanged between PoC devices, according to an embodiment; and

**Figure 9** illustrates another group of messages that may be exchanged between Terminal and Adapter and/or controller devices, according to an embodiment.

Note that same references are used across different figures when designating same elements.

DETAILED DESCRIPTION OF EMBODIMENTS OF THE INVENTION

According to general embodiments of the present invention, the activation of PoC devices is performed according to at least one of two possible activation modes, that are a sequential mode (which is a "slow" activation mode) in which some devices are activated sequentially (one after the other) and a fast start mode in which some (or all) devices are activated concurrently (for instance simultaneously). Both activation modes may coexist.

According to embodiments, the activation mode to use for a given device is determined based on the topology and the voltage conditions of the power segment to which it belongs. The topology may include localisation of devices and/or number of devices.

For example, if only localisation has changed but not the number of devices, the fast start activation mode may be used for all devices.

According to embodiments, the activation mode to use for a given device is determined based on the result of a voltage drop prediction. This prediction may consist in computing the power drop that would occur if at least one device of the linear bus were started up. For this purpose, all the devices on a power segment of the linear bus may be requested to measure the input voltage at their terminals.

For instance, devices having a stable voltage since the last startup (or prior to the powering up of the linear bus by the power source equipment) may be activated according to the fast start mode and new devices or devices for which a change in voltage has been observed may be activated according to the sequential activation mode.

It is noted that a device may be started up by receiving power, but the activation may also be delayed after the powering. That is, a device may receive power and may then be started up only upon receiving an activation signal.

Hence, according to embodiments, activating is performed upon the powering up of the linear bus by the power source equipment.

**Figure 2** schematically shows an arrangement of powered device 200 that is configured to embed embodiments of the invention.

The powered device comprises a terminal 210 and a controller 220.

The terminal 210 represents the core unit of the powered device providing the main functions of the device. The terminal 210 is for example a camera unit having the task of capturing a scene and transmitting data content - e.g. video stream(s) - over the network to a destination device which may be another device of the network or a remote device connected to the network. More generally, the terminal may be a communication unit configured to send and/or receive data over/from the network and drawing its power over the cable from a PSE.

Sufficient electric power needs to be drawn from the cable in order to run the functions of the terminal properly. For that purpose, the controller 220 is in charge of controlling the startup of the terminal 210 depending on the power available over the cable. The controller 220 is thus configured to at least determine if and when the terminal 210 can be activated.

The controller 220 operates at low power conditions (low voltage) compared to the consumption of the terminal. This means that a low voltage, e.g. 5 volts, is sufficient to activate the controller, while the terminal requires a higher voltage, e.g. 40 volts, to activate. Consequently, the controller 220 is started up first and is in charge of executing basic startup control functions requiring only a limited power amount from the network.

Optionally, the powered device 200 may embed another controller 221 capable of drawing more power (e.g. operating at nominal or intermediate voltage values 36, 48 or 56 V) if more advanced control functions are needed.

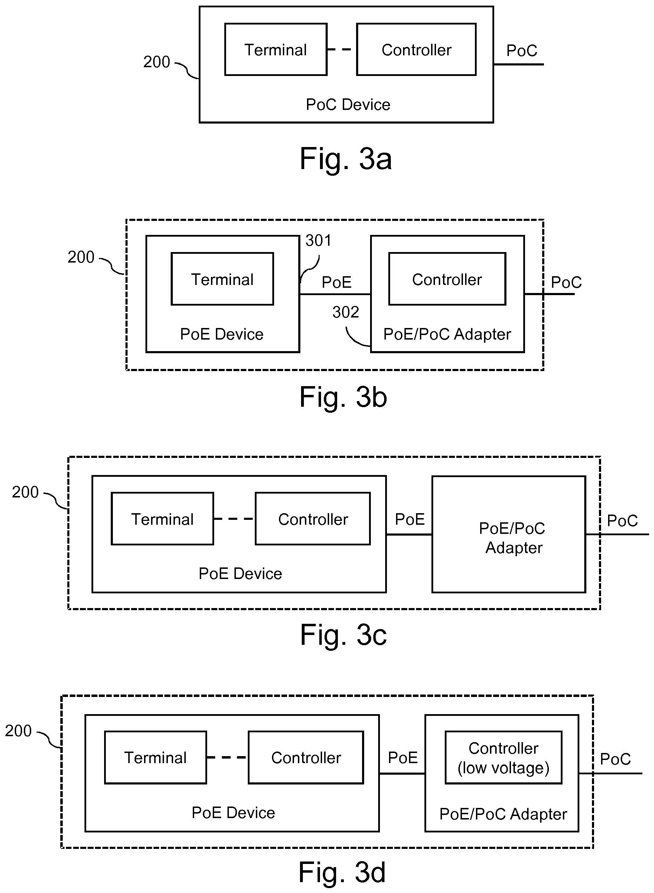

In the figure the powered device is represented as a single device comprising the terminal and the one or more controllers. This is for illustration only. The powered device 200 may be physically formed by two or more interconnected devices embedding the terminal and the one or more controllers. For example, one device may contain the terminal 210 and another one the controller 220 (as in the arrangements represented in Figures 3a to 3d).

Also, it is assumed that the voltage supplied at the input 230 of the powered device 200 from the cable (referred to as Vs) will slightly differ (i.e. less than 2V), if not the same, as the voltage that can be supplied to the terminal 210 (voltage drop due to the consumption of controllers is limited).

**Figures 3a, 3b, 3c** and **3d** represent different exemplary implementations (arrangements) of the powered device 200. For all these arrangements, it is assumed that the powered device is connected to a Power-over-Coax (PoC) network.

**Figure 3a** represents a native PoC powered device. The device embeds the controller and terminal modules, and has a network interface that is PoC compatible. In this arrangement, the controller may consume either low (e.g. less than 4W) or high power (e.g. more than 4W).

**Figure 3b** represents an arrangement in which the terminal is embedded in a Power-over-Ethernet (PoE) device 301, while the controller is embedded in a PoE/PoC adapter 302. The adapter 302 communicates with the PoE device 301 by means of an Ethernet protocol over an Ethernet cable, also applying PoE protocol for enabling power to the Terminal, and is connected to the network via a PoC interface. The PoE/PoC adapter role is to adapt between the formats PoE and PoC. Both the PoE device 301 and the PoE/PoC adapter 302 form the powered device 200. In this arrangement, the controller may consume either low (e.g. less than 4W) or high power (e.g. more than 4W).

**Figure 3c** represents an arrangement variant to **Figure 3b** in which the controller is embedded in the PoE device, instead of the adapter. In this arrangement, the controller may consume either low (e.g. less than 4W) or high power (e.g. more than 4W).

**Figure 3d** represents an arrangement variant to **Figure 3b** in which both the PoE device and the adapter device embed a controller module. In this arrangement, each of the controllers may consume either low (e.g. less than 4W) or high power (e.g. more than 4W). However, the controller in the adapter will preferably consume low power (e.g. less than 4W).

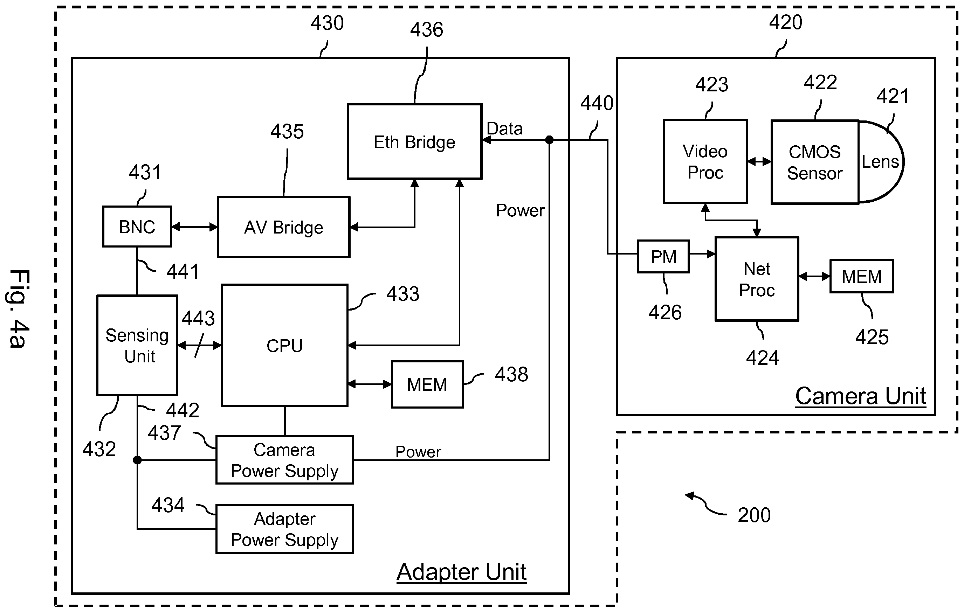

**Figure 4a** is a functional block diagram illustrating an implementation example of a powered device 200. In the illustration, the terminal is considered to be a camera unit. Other functional units may, of course, be considered.

The device 200 comprises a PoE camera unit 420 (or "network camera") and an adapter unit 430 connected by a cable 440, the cable 440 being for example an Ethernet link with Power over Ethernet capability for both data and power transmission.

The camera unit 420 comprises a lens 421, a sensor 422 (for example, a CMOS sensor), a video processor 423, a network processor 424, at least one memory 425 (a non-volatile memory, a read-access-memory RAM, a Flash memory, etc.), and a power module PM 426 powering the camera unit 420 via the cable 440. The camera unit 420 thus provides the core device functions of image capture (optics), image processing and memory, and may thus be considered as the "functional unit" of the device 200.

The adapter unit 430 comprises a connector 431, a sensing unit 432, a processor 433 ("Central Processing Unit" or CPU), an adapter power supply module (subsystem DC/DC converter) 434, a camera power supply module 437, an audio/video AV bridge 435, an Ethernet bridge 436, and at least one memory 438.

The connector 431, for example a BNC port, connects the device 200 to the PSE 120 (by means of the cable segment 130), allows the IP communications such as HomePlug AV packets over coax cable, and provides power to the device 200.

The sensing unit 432 has an input connection from the connector 431 by means of a wire 441, receiving power thereby, and has an output connection to the adapter power supply 434 and to the camera power supply 437 by means of a wire 442, supplying these latter with power. The sensing unit 432 is further connected to the processor 433 by means of one or more wires 443 for the exchange of data and/or commands.

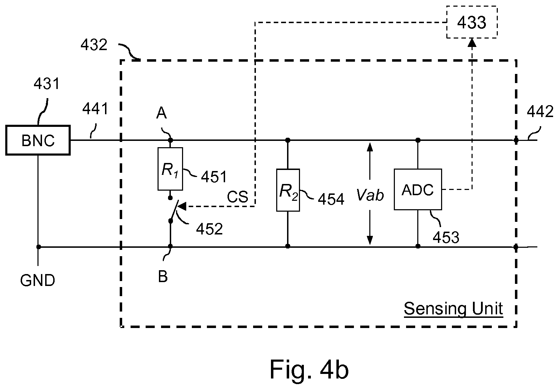

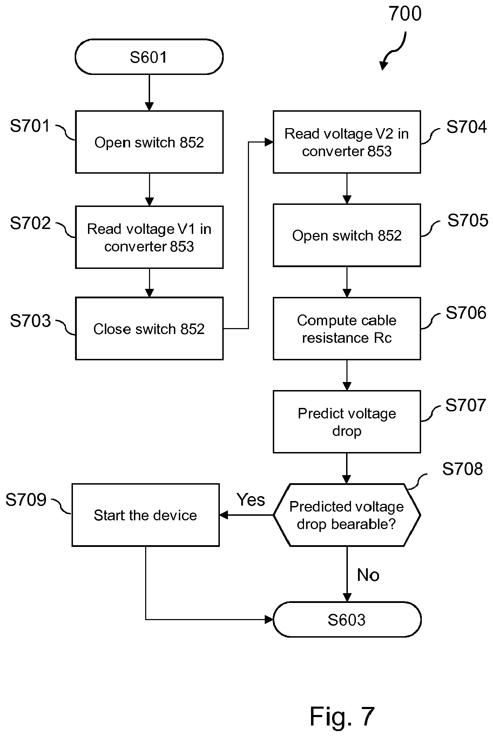

The sensing unit 432 implements a circuit for measuring physical quantities such as the voltage at the connector 431. The sensing unit 432 is configured to exchange data/commands with the processor 433, e.g. receive commands from the processor and provide the result of measurements to the processor by means of the wire(s) 443. This allows the processor to calculate parameters such as the cable resistance, as will be described in further detail with reference to **Figures 4b** and **7.**

The adapter power supply 434 powers the adapter unit 430, in particular a communication subsystem comprising the processor 433, the audio/video bridge 435, the Ethernet bridge 436, and the memory 438 (power connections not shown). The camera power supply 437 powers the camera unit 420 (more specifically, the power module PM 426) via the cable 440.

The AV bridge 435 ("Home Plug AV Bridge") encapsulates core camera IP traffic into HomePlug AV packets and sends the packets on the coax cable through the connector 431, and extracts IP traffic from received HomePlug AV packets and forwards this IP traffic to the camera unit 420. The Ethernet bridge 436 is connected to the camera unit 420, the processor 433, and the AV bridge 435, receiving IP traffic from each and combining the IP traffic. The processor 433 is capable of exchanging messages with other devices (e.g. cameras) of the same power segment and with the local camera unit 420 via the Ethernet bridge 436.

The powered device of Figure 4a is an example of the arrangement shown in Figure 3b, in which the PoE device 301 is the camera unit 420 and the PoE/PoC adapter 302 is the adapter unit 430.

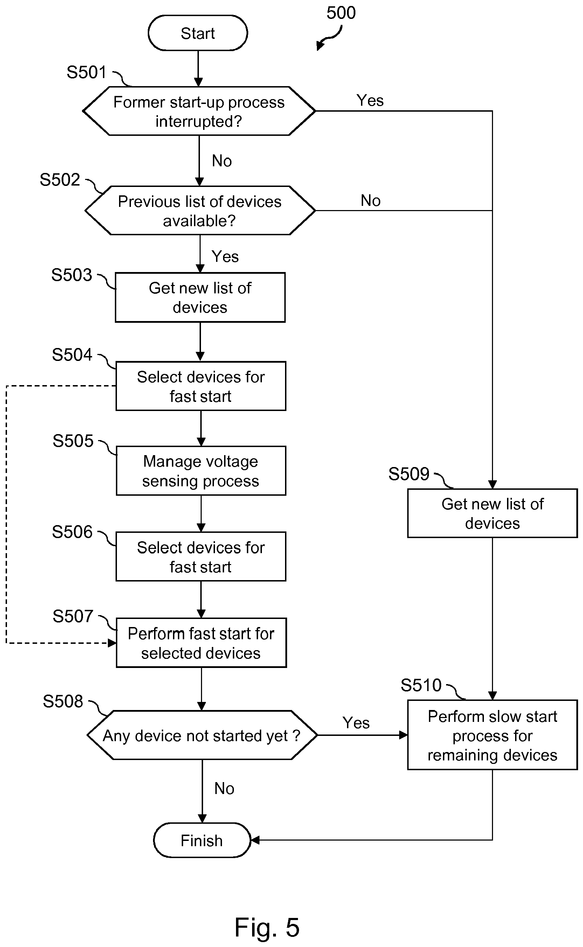

According to this arrangement, the controller is preferably implemented in the adapter unit 430, which means that the steps of Figures 5, 6 and 7 are executed by the processor 433 of the adapter unit. In other variants, the controller executing embodiments may be implemented by an ASIC or a dedicated processor either in the adapter unit (e.g. arrangement of Figure 3b) or in the powered device (e.g. arrangements of Figures 3a and 3c).

Note that even if the controller is not implemented in the adapter unit (e.g. arrangement of Figure 3c), it is still preferable to have the sensing unit implemented within the adapter unit to perform direct measurements of the voltage at the input of the powered device. Dedicated means are then established to allow exchange of data/commands between the controller and the sensing unit.

**Figure 4b** is a functional block diagram illustrating the sensing unit 432 shown in Figure 4a, and which is configured to implement a cable resistance calculation method as will be described in further detail with reference to **Figures 4b** and **7.**

The basis of the method is to measure the input voltage Vs and to use the measured value by a computing algorithm to calculate the resistance of the cable of the network segment to which the device 200 is connected.

As previously stated in relation with Figure 4a, the sensing unit 432 comprises a wire 441 coupling it to the connector 431 on input and a wire 442 coupling it to the adapter power supply 434 and to the camera power supply 437, as well as lines 443 coupling it to the processor 433.

The sensing unit 432 comprises a first resistance $R_1$ 451, a second resistance $R_2$ 454, a switch 452 (such as a transistor) and an analog to digital converter 453. The first resistance 451 and the second resistance 454 are mounted in parallel to the power source originating from the connector 431. The value of R1 is for example 1 KΩ and the value of R2 is for example 100 KΩ. The power consumption of the second resistance R2 is considered negligible compared to both the power consumption of the first resistance 451 and power supply capability. The first resistance 451 is thus used to modify the operating condition of the device 200 by increasing its power consumption.

The first resistance 451 and the switch 452 are in series between a node A and a node B of the circuit.

The switch 452 is controlled by a control signal CS provided by processor 433 (represented in dotted lines). Activation of the switch 452 causes it to close, coupling the resistance 451 between the nodes A and B. Deactivation of the switch 452 causes it to open, decoupling the resistance 451 from the nodes A and B. The converter 453 measures a voltage value Vab between the nodes A and B, and supplies a measured voltage value to the processor 433. Alternatively, the converter 453 may be integrated within the processor 433 and connected by wires to the nodes.

**Figure 5** is a flowchart illustrating operation of a controller module according to embodiments of the invention.

According to a first embodiment, the steps of the flowchart 500 may be executed by the controller module of a single PoE device 301 (as described in the arrangements of Figures 3c and 3d), acting as a master controller.

In a variant, the steps 500 may be executed by the controller module of a single adapter device 301 (as described in the arrangements of Figures 3b and 3d). In one embodiment, this single device may be selected by a user who triggers an activation signal at the level of Adapter device 302.

In a variant, the Adapter device having the highest Vs input voltage may enable the power for its PoE device 301.

At step S501, the controller checks, for example in a non-volatile memory such as memory 425, whether there is an information item indicating that a previous startup process has been interrupted, i.e. the last startup process failed due to a power shortage at PSE level.

If no former process was interrupted, the controller records, for example in a non-volatile memory, that a startup process has been initiated and moves to step S502.

Otherwise, i.e. if the last startup process failed, the controller records, for example in a non-volatile memory, that a startup process has been initiated and moves to step S509.

In step S509, the controller that detected a failed startup attempt gets the current list of network devices and records it, for example in a non-volatile memory, before performing a slow startup process for all the PoC devices on its power segment in step S510. The slow startup process may consist of sequentially activating the PoC devices. The slow startup process may more generally allow to control which PoC devices to start first and/or how many PoC devices can be eventually started up for concurrent operation.

Back to step S502, a controller that did not detect a former failed startup attempt now checks for any past list of devices already stored for example in its local non-volatile memory. The absence of such an already-stored past list of devices means that the current startup process initiated in step S501 is the very first startup process of the system. Therefore, the controller may preferably perform a slow startup process of the several PoC devices in the system by going through steps S509 and S510. The slow startup process may consist of sequentially activating the PoC devices.

If a list of devices has already been stored, for example in its local non-volatile memory, the controller gets the current list of network devices and records it, for example in a non-volatile memory, in step S503.

In step S504, the controller compares the past and the current lists of network devices on its power segment so as to differentiate the persistent network devices present in the system (i.e. devices that are present in both lists of devices) from those who have newly joined the network (i.e. devices that are present in the current list of devices but are not in the past list of devices).

In one variant, the controller may select the persistent devices as candidate devices for a fast startup process. The fast startup process (fast start mode) may consist of activating the candidate devices concurrently.

In another variant, if a minimum number of new devices (e.g. one new device) has been identified, the controller does not select any device as a candidate device for fast startup process.

In another variant, the controller compares the number of devices belonging to the past and the current lists of network devices on its power segment. If both lists have the same number of devices, the controller may select all the devices belonging to the current devices list as candidate devices for a fast startup process. In such a case, the controller should preferably perform step S505.

In a preferred embodiment, the controller may always perform step S505 once it has completed S504.

In another variant, the controller skips steps S505 and S506 and performs step S507 right after step S504.

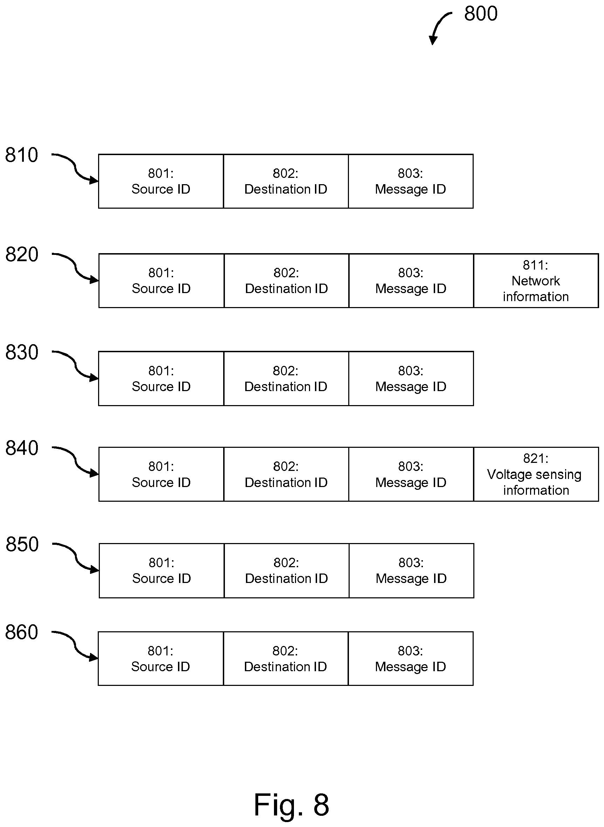

In step S505, the controller requests all the PoC devices on the power segment, including itself, to measure the input voltage Vs at their terminals. This is done by using specific message signaling, as represented in **Figure 8.** In this respect, message format 830 may be used to request a PoC device to perform such a voltage sensing action, while message format 840 may be used to get from any PoC device the Vs value resulting from their voltage sensing action.

In one variant, the controller may also request the PoC devices to provide information on their expected power consumption once their Terminal device is on.

In step S506, based on the Vs values resulting from step S505, the controller records the Vs value for each PoC device on the power segment in its non-voltage memory and compares these values with previously stored Vs values, so as to differentiate the PoC devices with persistent Vs voltage values (i.e. devices whom Vs voltage variation is null or below a specific threshold, e.g. 1V) from those having non-persistent Vs voltage values (i.e. devices whom Vs voltage variation is non-null or above a specific threshold, e.g. 1V).

In one variant, the controller may perform the aforementioned Vs voltage comparison only for the devices that have been selected as candidate devices for a fast startup process.

In one variant, the controller may select the PoC devices with persistent Vs voltage values as candidate devices for a fast startup process.

In another variant, the controller does not select any device as a candidate device for a fast startup process if a minimum number of devices with non-persistent Vs voltage value is identified (e.g. one device with non-persistent voltage value).

In another variant, the controller may just check whether any device belonging to the current devices list has the same Vs voltage values as the previously stored Vs values (or within a close range, e.g. Vs ± 5%), as well as the same estimated power consumption (or within a close range, e.g. ± 5%) regardless of their identifiers (i.e. regardless of whether these devices are new or persistent devices, as discussed in S505). The controller may then select such PoC devices as candidate devices for a fast startup process. In other words, if a previous PoC device was replaced at the same place on the power segment by a new PoC device having the same estimated power consumption, this device may be selected as a candidate for a fast startup process.

In the following step S507, the controller allows the candidate devices for a fast startup process identified in steps 504 and 506 to enable power for their Terminal device and to activate them concurrently. This may be done by using specific message signaling, as represented in **Figure 8.** In this respect, the message format 850 may be used to request one or more PoC devices to start up its Terminal device.

In step 508, the controller checks whether any devices on the power segment have not been considered for start up yet, i.e. whether any devices, which have not been selected as candidate devices for a fast startup process have not started up their Terminal device.

If so, the controller performs the slow start process for these remaining devices in step S510.

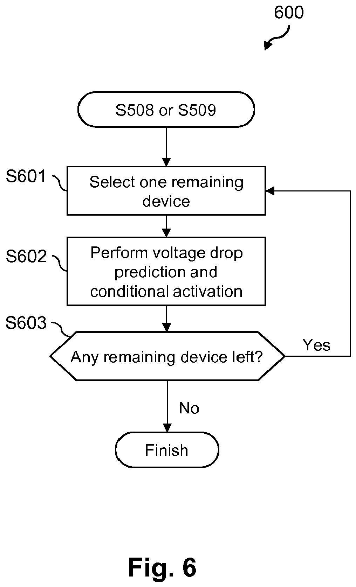

**Figure 6** is a flowchart illustrating one way to perform such slow start process.

In this example, the controller selects in step S601 one PoC device that has not been considered yet for starting up its Terminal device and requests it to perform voltage drop prediction.

An example of an algorithm along with the associated computation for performing such a prediction process is described with reference to Figure 7. Some specific message signaling may be used for requesting voltage drop prediction from a PoC device in the system, as represented in Figure 8. In this respect, the message format 860 may be used to request a PoC device to perform such voltage drop prediction.

Other methods for determining the ability of a PoC device to start up its Terminal device may also be considered, for instance, such as the collaborative method described in WO2018007363A1. If the predicted voltage drop resulting from step S602 is acceptable, i.e. it does not lead to the voltage at PoC device bounds to go below its minimum operating voltage, the PoC device is started.

Once the selected PoC device has completed its voltage drop prediction, and potential subsequent activation, in step S602, the controller checks in step S603 whether there are any remaining devices on the power segment that have not been considered for startup yet, i.e. if any devices, which have not been selected as candidate devices for a fast startup process, have performed the voltage prediction and conditional activation step S602.

If so, the controller moves back to step S601.

According to another embodiment, the execution of steps 500 is split between the controller module of a single PoE device 301 and the controller module of all the adapter devices 302 (as described in the arrangement of Figure 3d).

According to this variant, the controller in each of the adapter devices 302 on a given power segment will get the new list of devices described in step S503 on their own, without any prior request from a remote controller. The master controller will then read the new device list from the non-volatile memory of one or more local or remote adapter devices on the power segment.

According to this variant, the controller in each of the adapter devices 302 on a given power segment will perform Vs voltage sensing, as previously described in step S505, on its own, without any prior request from a remote controller. The master controller will then read the Vs voltage value from the non-volatile memory of each of the adapter devices on the power segment.

According to another embodiment, the steps 500 may be executed by the low-power controller module of each of the PoC devices 200 (as described with reference to Figure 3a) or by the low-power controller module of all the adapter devices 302 (as described with reference to Figures 3b and 3d) of a given power segment in the system, without the need for any master controller.

According to this variant, each controller module performs all the steps from S501 through S510, and S601 through S603, without need for exchanging specific message signaling through the communication network.

Performing step S602 in a distributed way may require coordination between the several controllers on a given power segment. In order to achieve such coordination, time may be counted by each controller from when the voltage at the input 230 exceeds a specific activation threshold. This gives substantially a same origin for performing actions related to the steps 600.

In order to select a controller in step S601, a random time period may be set by the controller elapse of which the controller must await before performing step S602.

Of course many variants may be considered for defining a common time reference, such as a reference signal broadcast over the network. Still, having a common time reference is not essential as different origins may be considered to be equivalent to adding a variable initial period to a same "virtual" common origin between all the devices, which then adds a disparity in the waiting time periods between the different devices.

The distributed control of the startup of terminals, i.e. without the necessity for the devices of the network to coordinate with each other or the need for a synchronization protocol or the like, makes the installation and maintenance of devices (e.g. addition and/or removal of new devices) particularly easy.

**Figure 7** is a flowchart illustrating steps of a method 700 of predicting a voltage drop that would occur as a result of activating the terminal and drawing power from the network; i.e. while the camera unit 420 is not yet powered up/activated. This corresponds to an implementation example of step S602 described with reference to Figure 6.

The method is for example executed by the processor 433 (shown in Figure 4a) of the adapter unit 430 and uses the sensing unit 432 shown in Figure 4b.

The prediction is determined assuming that the camera unit 420 consumes power according to a given power class Pc when activated.

At step S701, the processor 433 opens the switch 452. It may be noted that as the default state of the switch 452 is "open", execution of this step is optional.

At step S702, the processor 433 reads the output of the ADC 453 and receives a numerical voltage value V1 representing the voltage at the output of the sensing unit when the first resistance 451 is not connected. Note that the camera unit 420 is not activated and thus no current is consumed by the camera unit.

Once the numerical voltage value V1 has been received, the processor 433 closes the switch 452 at a step S703 and reads the output V2 of the ADC 453 at a step S704. The numerical voltage value V2 represents the voltage at the output of the sensing unit when the first resistance 451 is connected.

At step S705, and optionally, the processor 433 reopens the switch 452 to set it in a default state.

The processor 433 then calculates at step S706 the resistance Rc of cable 103 by applying the following formula:

$$Rc = \frac{V1 - V2}{\delta Ic - \left(\frac{V2}{R1}\right)}$$

where $\delta Ic = \left(\frac{Pa}{V2}\right) - \left(\frac{Pa}{V1}\right)$ and Pa is the power consumption of the adapter unit 430.

Next, at step S707 the processor 433 calculates a prediction of the power drop that would occur if the camera unit 420 (terminal) were started up. First, the predicted voltage Vp at the input the of the powered device is determined based on the predicted current Ip:

$$I_p = \frac{-V_{dd} - \sqrt{(V_{dd}^2 - 4Rc\,(Pc + Pa))}}{2 * Rc}$$

$$V_p = \frac{(Pc + Pa)}{I_p}$$

where Pc is the power class of the camera unit representing the predicted consumption of the camera unit and Vdd is the nominal voltage output of the PSE 120, such as 56 V.

The voltage drop thus represents the difference Vs - Vp.

At step S708, the processor 433 determines whether the predicted voltage drop is bearable. This for example may be determined simply by checking if Vp ≥ Von_min.

If the voltage drop is bearable (e.g. Vp ≥ Von_min), then the terminal activation step S404 is executed, otherwise step S401 is executed or step S403 is re-executed (immediately or after some delay). In one implementation, if the voltage drop is not bearable after a certain number of retries, the processor 433 may notify through a user interface, e.g. a LED, that the camera unit 420 cannot be activated.

**Figure 8** illustrates a group 800 of messages 810, 820, 830 and 840 exchanged between any two PoC devices 200 (**Figure 2**) when performing the method 500 and the method 600.

The controller has thus the ability to manage the execution of the methods of Figure 5 and Figure 6 whenever required by the arrangement of the powered device.

In the embodiment shown in Figure 8, the messages 810, 820, 830, 840, 850 and 860 all comprise a source identification 801, a destination identification 802, and a message identification 803.

The source identification 801 identifies the entity emitting the message, such as the MAC or IP address of the terminal or of the unit embedding the controller (such as the adapter unit).

The destination identifier 802 identifies the entity targeted by the message, such as the MAC or IP address of the terminal or of the unit embedding the controller (such as the adapter unit).

The message identifier 803 uniquely identifies the message.

It may be noted that in various embodiments, the source ID 801 or destination ID 802 may not be used.

Message 810 is a device list request message used by the master controller (source) to request an adapter device (destination), either local or remote, to provide its network devices list, i.e. the list of all the devices it has discovered on the power segment.

Message 820 is a device list information message used by an adapter device (source), to provide the master controller (destination) with its network devices list, i.e. the list of all the devices it has discovered on the power segment. Device list information 821 is thus appended to the message 820, and may provide one or more identifier(s) of each of the devices discovered on the power segment. Information 821 may embed one or more identifier of each of the devices belonging to the current devices list or to a past devices list, as discussed in the description of Figure 5.

Message 830 is a voltage sensing request message used by the master controller (source) to request that the adapter device embedding the sensing unit (destination) measures the voltage Vs.

Message 840 is a voltage sensing report message used by the device embedding the sensing unit (source) to provide the master controller (destination) with the measured voltage Vs on the cable at the input 230. Voltage sensing information 841 is thus appended to the message 840, and may provide either the measured voltage Vs. Information 841 may also include some past Vs voltage value, as discussed in the description of Figure 5.

Message 850 is a device startup request message used by the master controller (source) to request a destination adapter device (embodiment of Figure 3b, 3c and 3d) or a destination controller (embodiment of Figure 3a) to start up (i.e. to enable power) its Terminal device.

Message 860 is a voltage prediction request message used by the master controller (source) to request an adapter device (destination), either local or remote, to perform voltage drop prediction as in step S602 described with reference to Figure 6 and described with reference to Figure 7.

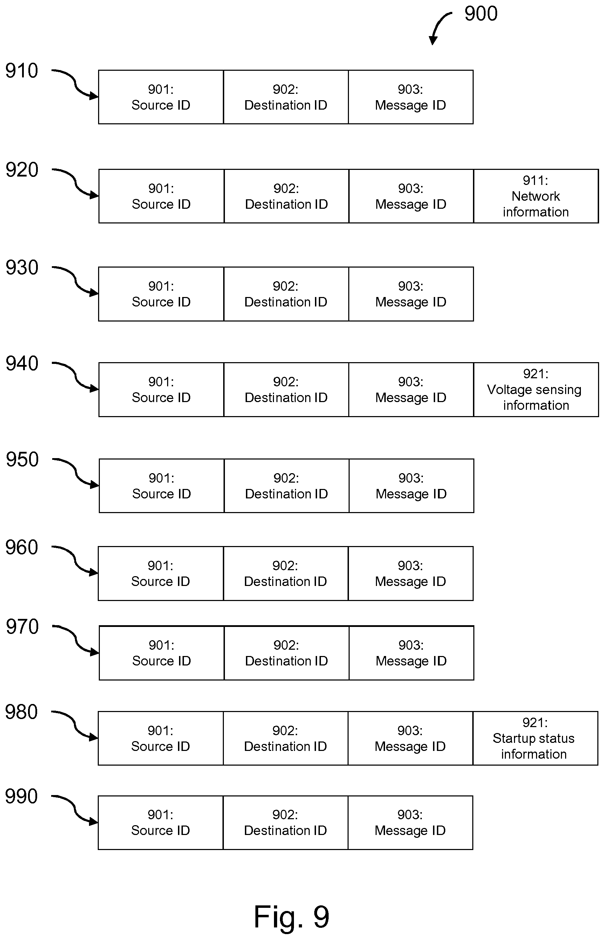

**Figure 9** illustrates messages that may be exchanged between the controller 310 of a PoE device and an adapter device 302 (embodiment of Figure 3c) or between the controller 310 of a PoE device and the controller 320 of an adapter device 302 (embodiment of Figure 3d) when performing the steps of the method 500 and the steps of the method 600.

In particular, the figure illustrates a group 900 of messages 910, 920, 930, 940, 950, 960, 970, 980 and 990 exchanged between the terminal 210 and the controller 220 (as shown in Figure 2). The controller has thus the ability to manage the execution of the steps shown in Figure 5 whenever required by the arrangement of the powered device.

In the embodiment shown in **Figure 9,** the messages 910, 920, 930 and 940 all comprise a source identification 901, a destination identification 902, and a message identification 903.

The source identification 901 identifies the entity emitting the message, such as the MAC or IP address of the terminal or of the unit embedding the controller (such as the adapter unit).

The destination identifier 902 identifies the entity targeted by the message, such as the MAC or IP address of the terminal or of the unit embedding the controller (such as the adapter unit).

The message identifier 903 uniquely identifies the message.

It may be noted that in various embodiments, the source ID 901 or destination ID 902 may not be used.

Message 910 is a device list request message used by the controller 310 (source) to request the adapter device 302 (destination) to provide its network devices list, i.e. the list of all the devices it has discovered on the power segment.

Message 920 is a device list information message used by an adapter device 302 (source), to provide controller 310 (destination) with its network devices list, i.e. the list of all the devices it has discovered on the power segment. Device list information 921 is thus appended to the message 920, and may provide one or more identifier(s) of each of the devices discovered on the power segment. Information 921 may embed one or more identifiers of each of the devices belonging to the current devices list or to a past devices list, as discussed in the description of Figure 5.

Message 930 is a voltage sensing request message used by controller 310 (source) to request that the adapter device 302 (destination), which embeds the sensing unit, measures the voltage Vs.

Message 940 is a voltage sensing report message used by the adapter device 302 (source), which embeds the sensing unit, to provide the master controller (destination) with the measured voltage Vs on the cable at the input 230. Voltage sensing information 941 is thus appended to the message 940, and provides the measured voltage Vs. Information 941 may also include some past Vs voltage value, as discussed in the description of Figure 5.

Message 950 is a device startup request message used by the adapter device 302 (source) to request the destination controller 310 (embodiment of Figure 3c and 3d) to start up its terminal device.

Message 960 is a voltage prediction request message used by controller 310 (source) to request an adapter device 302 (destination) to perform voltage drop prediction as described in step S602 of Figure 6 and Figure 7.

Message 970 is a startup status request message used by the controller 310 (source) to request the adapter device 302 (destination) to provide information related to a former startup failure, as in step S501 of Figure 5.

Message 980 is a startup status information message used by an adapter device 302 (source), to provide controller 310 (destination) with information related to a former startup failure, as in step S501 of Figure 5. Startup status information 981 is thus appended to the message 980 and provides information related to a potential former startup failure.

Message 990 is a Terminal startup request message used by the adapter device 302 (source) to request a destination controller 310 (embodiment of Figure 3c and 3d) to start up its terminal device.

Although the present invention has been described hereinabove with reference to specific embodiments, the present invention is not limited to the specific embodiments, and modifications which lie within the scope of the present invention will be apparent to a person skilled in the art. In particular different features from different embodiments may be interchanged, where appropriate. Many further modifications and variations will suggest themselves to those versed in the art upon making reference to the foregoing illustrative embodiments, which are given by way of example only and which are not intended to limit the scope of the invention as determined by the appended claims.

**Claims**

1. A controller device for controlling activation of devices interconnected by a power-over-data linear bus to which an item of power source equipment is also connected, the controller being configured to carry out the following steps:

    determining whether at least one of the topology or the voltage conditions on the linear bus has changed relatively to a reference configuration; selecting at least one activation mode depending on the result of the determining step; and activating each device in the linear bus according to one of the at least one selected activation modes.

2. The controller device of claim 1, wherein the at least one activation mode is selected from among:

    a sequential mode in which devices of a set are activated sequentially; and a fast start mode in which devices of a set are activated concurrently.

3. The controller device of any one of the preceding claims, wherein the reference configuration is the topology of the devices connected on the linear bus at the last startup.

4. The controller device of any one of the preceding claims, wherein the reference configuration is the number of devices connected on the linear bus upon the last startup.

5. The controller device of any one of the preceding claims, wherein the selecting step comprises selecting a first set of devices to be activated with a first activation mode and selecting a second set of devices to be activated with a second activation mode.

6. The controller device of any one of the preceding claims, configured to perform the steps of determining, selecting and activating upon the powering up of the linear bus by the power source equipment.

7. The controller device of any one of the preceding claims, configured to perform voltage drop prediction comprising computing a prediction of the power drop that would occur if at least one device of the linear bus were started up.

8. The controller device of any one of the preceding claims, configured to perform a voltage sensing process comprising requesting all the devices on a power segment of the linear bus, including itself, to measure the input voltage at their terminals.

9. A device of a power-over-data linear bus interconnecting a plurality of devices and an item of power source equipment, the device including the controller device of claim 1.

10. The device of claim 9, wherein the device is a Power over Ethernet (PoE) communication device.

11. The device of claim 9, wherein the device is an adapter Power over Ethernet (PoE) device configured to connect an edge PoE communication device to the power source equipment by means of at least one cable segment so as to form a power network.

12. A method for controlling activation of devices interconnected by a power-over-data linear bus to which an item of power source equipment is also connected, the method comprising:

    determining whether at least one of the topology or the voltage conditions on the linear bus has changed relatively to a reference configuration; selecting at least one activation mode depending on the result of the determining step; and activating each device in the linear bus according to one of the at least one selected activation modes.

13. A computer program product for a programmable apparatus, the computer program product comprising instructions for carrying out the method according to claim 12 when the program is loaded and executed by a programmable apparatus.

14. A non-transitory computer-readable medium storing a program which, when executed by a microprocessor or computer system in a device of a power-over-cable system, causes the device to perform the method of claim 12.

Fig. 1

Fig. 2

Fig. 3a

Fig. 3b

Fig. 3c

Fig. 3d

Fig. 4a

Fig. 4b

500

S501 — Start

S501 — Former start-up process interrupted? — Yes

No

S502 — Previous list of devices available? — No

Yes

S503 — Get new list of devices

S504 — Select devices for fast start

S505 — Manage voltage sensing process

S506 — Select devices for fast start

S507 — Perform fast start for selected devices

S509 — Get new list of devices

S508 — Any device not started yet ? — Yes

No

S510 — Perform slow start process for remaining devices

Finish

Fig. 5

600

**Fig. 6**

700

S601

S701 — Open switch 852

S702 — Read voltage V1 in converter 853

S703 — Close switch 852

S704 — Read voltage V2 in converter 853

S705 — Open switch 852

S706 — Compute cable resistance Rc

S707 — Predict voltage drop

S708 — Predicted voltage drop bearable?

Yes

S709 — Start the device

No

S603

Fig. 7

800

810

| 801:<br>Source ID | 802:<br>Destination ID | 803:<br>Message ID |
|---|---|---|

820

| 801:<br>Source ID | 802:<br>Destination ID | 803:<br>Message ID | 811:<br>Network<br>information |
|---|---|---|---|

830

| 801:<br>Source ID | 802:<br>Destination ID | 803:<br>Message ID |
|---|---|---|

840

| 801:<br>Source ID | 802:<br>Destination ID | 803:<br>Message ID | 821:<br>Voltage sensing<br>information |
|---|---|---|---|

850

| 801:<br>Source ID | 802:<br>Destination ID | 803:<br>Message ID |
|---|---|---|

860

| 801:<br>Source ID | 802:<br>Destination ID | 803:<br>Message ID |
|---|---|---|

# Fig. 8

900

910

| 901:<br>Source ID | 902:<br>Destination ID | 903:<br>Message ID |
|---|---|---|

920

| 901:<br>Source ID | 902:<br>Destination ID | 903:<br>Message ID | 911:<br>Network information |
|---|---|---|---|

930

| 901:<br>Source ID | 902:<br>Destination ID | 903:<br>Message ID |
|---|---|---|

940

| 901:<br>Source ID | 902:<br>Destination ID | 903:<br>Message ID | 921:<br>Voltage sensing information |
|---|---|---|---|

950

| 901:<br>Source ID | 902:<br>Destination ID | 903:<br>Message ID |
|---|---|---|

960

| 901:<br>Source ID | 902:<br>Destination ID | 903:<br>Message ID |
|---|---|---|

970

| 901:<br>Source ID | 902:<br>Destination ID | 903:<br>Message ID |
|---|---|---|

980

| 901:<br>Source ID | 902:<br>Destination ID | 903:<br>Message ID | 921:<br>Startup status information |
|---|---|---|---|

990

| 901:<br>Source ID | 902:<br>Destination ID | 903:<br>Message ID |
|---|---|---|

Fig. 9

Europäisches
Patentamt

European
Patent Office

Office européen
des brevets

# EUROPEAN SEARCH REPORT

**Application Number**

EP 19 21 3689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 549 953 A (CANON KK [JP]) 8 November 2017 (2017-11-08) * page 3, line 5 - page 29, line 16 * ----- | 1-14 | INV. H04L12/10 |
| A | US 2008/114998 A1 (FERENTZ ALON [IL] ET AL) 15 May 2008 (2008-05-15) * the whole document * ----- | 1-14 | |
| A | US 2010/117808 A1 (KARAM ROGER A [US]) 13 May 2010 (2010-05-13) * the whole document * ----- | 1-14 | |

**TECHNICAL FIELDS SEARCHED (IPC)**

H04L

The present search report has been drawn up for all claims

| Place of search | Date of completion of the search | Examiner |
|---|---|---|
| Munich | 24 March 2020 | Le Bras, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 3689

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2020

| Patent document cited in search report | | Publication date | Patent family member(s) | Publication date |
|---|---|---|---|---|
| GB 2549953 | A | 08-11-2017 | NONE | |
| US 2008114998 | A1 | 15-05-2008 | NONE | |
| US 2010117808 | A1 | 13-05-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050108588 A

- WO 2018007363 A1